# EUROPÄISCHE PATENTSCHRIFT

(11) **EP 1 000 685 B1**
(45) Veröffentlichungstag und Bekanntmachung des Hinweises auf die Patenterteilung: **29.08.2001**
(21) Anmeldenummer: 99121395.0
(22) Anmeldetag: 27.10.1999
(51) Int. Cl.: B21D 51/26, B23K 26/00

(54) **Verfahren zur Herstellung von Flachrohren bzw. Dosenrümpfen aus Blech für die Fertigung von Dosen**
Process for the fabrication of flat tubes cq. can bodies of metal sheet for the production of cans
Procédé de fabrication de tubes plats cq. troncs de boîte en tôle pour la fabrication des boîtes

(30) Priorität: 13.11.1998 DE 19852342
(43) Veröffentlichungstag der Anmeldung: 17.05.2000
(73) Patentinhaber: Rasselstein Hoesch GmbH, 56626 Andernach (DE)
(72) Erfinder: Sauer, Reiner, Dr., 56566 Neuwied (DE); Kern, Karl-Heinz, 56566 Neuwied (DE)
(74) Vertreter: Rapp, Bertram, Dr.

(56) Entgegenhaltungen:
- DE-A- 19 702 265
- US-A- 4 859 826

## Beschreibung

Die Erfindung betrifft ein Verfahren zur Herstellung von Dosenrümpfen aus Blech für die Fertigung von Dosen durch
Zusammenführen und Aufeinanderlegen von zwei auf Enddicke gewalzten Blechbändern, deren Breite ein Mehrfaches des halben Umfanges eines Dosenrumpfes beträgt,
Verbinden der aufeinanderliegenden Blechbänder durch mehrere kontinuierlich in Bandlängsrichtung verlaufende Verbindungsschweißnähte, deren gegenseitiger Abstand in Bandquerrichtung dem halben Dosenrumpfumfang entspricht, durch kontinuierliches Vorbeibewegen der aufeinanderliegenden Blechbänder an einer Laser-Schweißeinrichtung mit mehreren, in entsprechenden gegenseitigen Abständen angeordneten Laserköpfen,
Längsschneiden der miteinader verschweißten Blechbänder durch Laserschneiden längs jeder Verbindungsschweißnaht zur Erzeugung mehrerer nebeneinanderliegender Flachrohre,
gegebenenfalls Aufrollen der Flachrohre zur Zwischenlagerung und/oder Transport,
Entrollen der gegebenenfalls aufgerollten Flachrohre,
Querschneiden der Flachrohre in Flachrohrabschnitte, deren Länge etwa der Dosenhöhe entspricht, und
Aufspreizen der einzelnen Flachrohrabschnitte zu jeweils einem, insbesondere zylindrischen, Dosenrumpf.

Die Erfindung betrifft ebenfalls ein Verfahren zur Herstellung von Flachrohren aus Blech für die Fertigung von Dosenrümpfen gemäß dem Oberbegriff des Anspruchs 2.

Derartige Verfahren sind durch die DE 197 02 265 A1 bekannt. Bei den bekannten Verfahren erfolgt das gegenseitige Verschweißen der Blechbänder und das Längsschneiden der miteinander verschweißten Blechbänder in zwei aufeinanderfolgenden Arbeitsschritten. An einer Schweißstation werden die beiden Blechbänder mittels mehrerer nebeneinander angeordneter Laserköpfe zunächst miteinander verschweißt, so daß sie zunächst entlang der Verbindungsschweißnähte miteinander zusammenhängende Flachrohre bilden. An einer der Schweißstation in Abstand nachgeordneten Schneidstation werden dann die Blechbänder mittels Schneidlasern längs der Mitte jeder Verbindungsschweißnaht voneinander getrennt. Es entstehen so mehrere, nebeneinander angeordnete, durch Schnitte voneinander getrennte Flachrohre, die zu Haspeln aufgewickelt werden. Die Haspeln werden dann zu einem Abfüller geliefert, wo sie mit relativ einfachen Maschinen quergeschnitten und zu Dosenrümpfen aufgespreizt werden. Der apparative Aufwand zur Durchführung der bekannten Verfahren ist verhältnismäßig hoch, weil zum Schweißen und zum Schneiden jeweils separate Laserköpfe erforderlich sind. Durch Verstellen des gegenseitigen Abstandes der Laserköpfe in Bandrichtung, läßt sich die Breite der herzustellenden Flachrohre dem jeweils gewünschten Durchmesser der später hieraus zu fertigenden Dosenrümpfe verändern. Dabei muß dafür gesorgt werden, daß der gegenseitige Abstand der Schweißlaser ganz exakt dem gegenseitigen Abstand der Schneidlaser entspricht. Außerdem müssen die Schneidlaser in Bandlängsrichtung exakt mit den Schweißlasern fluchten, da sonst die Schneidlaser die zuvor hergestellten Verbindungsschweißnähte nicht exakt in der Mitte auseinanderschneiden.

Der Erfindung liegt daher die Aufgabe zugrunde, die eingangs erwähnten Verfahren zur Herstellung von Dosenrümpfen bzw. Flachrohren aus Blech für die Fertigung von Dosen bzw. Dosenrümpfen so zu verbessern, daß sie mit einem geringeren apparativen Aufwand sowie mit größerer Betriebssicherheit und Fertigungsgenauigkeit durchführbar sind.

Dies wird nach der Erfindung durch die Merkmale der Ansprüche 1 und 2 erreicht. Das Schweißen und das Längsschneiden erfolgt gleichzeitig mit jeweils ein und demselben Laserkopf, dessen Laserstrahl zum Längsschneiden einen inneren Strahlengang mit hoher Energiedichte und zum Verschweißen der beidseitig des Schnittes liegenden Bereiche der aufeinanderliegenden Blechbänder einen Strahlengang niedrigerer Energiedichte aufweist.

Anspruch 3 betrifft eine Weiterbildung des Verfahrens des Anspruchs 2.

Die Erfindung geht also von dem Gedanken aus, das gegenseitige Verschweißen der beiden Blechbänder und das Längsschneiden jeweils zur selben Zeit und am selben Ort durch einen einzigen Laserkopf, dessen Laserstrahl eine entsprechende Energiedichteverteilung aufweist, durchzuführen. Hierdurch wird die Einrichtung zur Durchführung der Verfahren wesentlich einfacher, denn ein zweiter Laserkopf, der beiden bisherigen Verfahren nur zum Längsschneiden vorgesehen war, entfällt. Außerdem gibt es bei den neuen Verfahren keine Probleme bezüglich der exakten Einstellung des Schneidlasers gegenüber dem zugeordneten Schweißlaser, weil das Schweißen und das Schneiden durch ein und denselben Laserstrahl ausgeführt wird. Dadurch werden Einstellarbeiten vereinfacht, die Betriebssicherheit der Verfahren verbessert und auch die Arbeitsgenauigkeit erhöht.

Die erfindungsgemäßen Verfahren wird nachstehend anhand der beiliegenden Zeichnungen näher erläutert. Es zeigen:
- Figur 1: die schematische Darstellung von erfindungsgemäßen Verfahrensschritten,
- Figur 2: einen Querschnitt der Blechbänder im Bereich des Schneidlasers in stark vergrößertem Maßstab.

Zur Durchführung der Verfahren kann Weißblech (verzinntes Feinstblech), verchromtes Feinstblech oder auch blankes Blech aus Stahl im Dickenbereich von 0,05 - 0,49 mm eingesetzt werden. Die Festigkeit des Stahlbleches kann im Bereich zwischen 200 und mehr als 1000 N/mm² liegen. Das Stahlblech kann einseitig oder beidseitig eine organische Beschichtung aufweisen, die in bekannter Weise als Lackierung, als Kunststoffolie, oder auch durch Direktextrusion aufgebracht ist. Falls erforderlich, kann die Beschichtung auch im Bereich der späteren Schweißnähte Aussparungen aufweisen. Es können auch Blechbänder aus anderen Metallen als Stahl, z.B. aus Aluminium, verwendet werden.

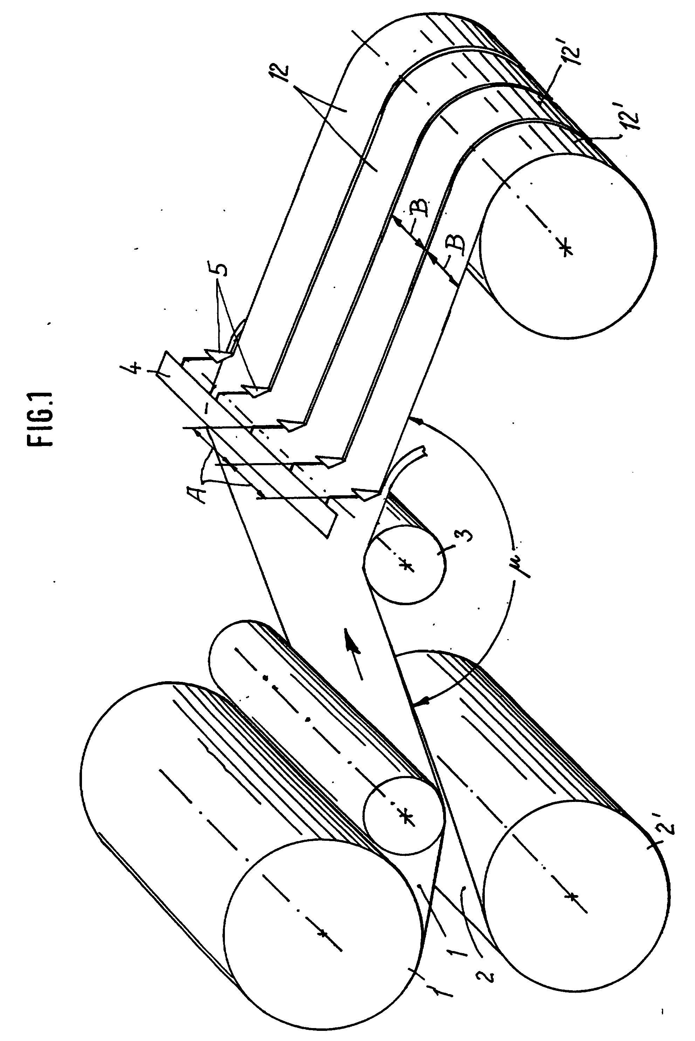

Wie aus Figur 1 ersichtlich ist, werden zwei Bänder 1, 2 von zwei Rollen 1', 2' kommend zusammengeführt und dabei aufeinandergelegt. Die Bänder 1,2 können dabei eine Breite von beispielsweise 1200 mm haben. Die aufeinandergelegten Blechbänder 1, 2 werden unter Spannung gemeinsam so über eine Umlenkwalze 3 geführt, daß die vor und hinter der Umlenkwalze 3 verlaufenden Bandabschnitte miteinander einen stumpfen Umlenkwinkel µ bilden. Die Spannung in den beiden Bändern 1, 2 wird dadurch erzeugt, daß die Rollen 1', 2' beim Abwickeln der Blechbänder 1, 2 gebremst werden, wodurch ein sogenannter Rückzug entsteht und andererseits die aus den Blechbändern 1, 2 gebildeten Flachrohre 12 unter Spannung aufgewickelt werden, wodurch ein sogenannter Vorzug entsteht. Durch das Gegeneinanderwirken von Rückzug und Vorzug entsteht in den aufeinanderliegenden Blechbändern eine Spannung und durch die gleichzeitige Umlenkung der Blechbänder 1, 2 mittels der Umlenkwalze 3 werden die Blechbänder im Bereich der Umlenkwalze 3 fest aufeinandergedrückt. Gegebenenfalls können von oben auch noch nicht dargstellte Druckrollen wirken.

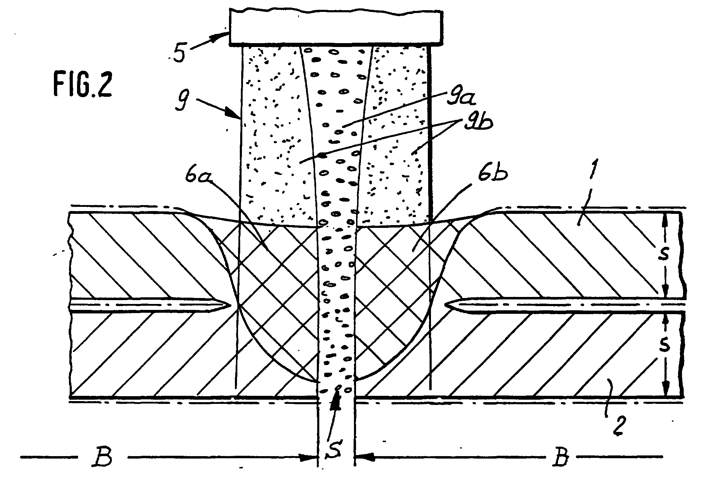

Im Bereich der Umlenkwalze 3 oder auch benachbart zu dieser ist eine Laser-Schweißeinrichtung 4 angeordnet, die mehrere Laserköpfe 5 aufweist. Der gegenseitige Abstand A der Laserköpfe ist einstellbar. Die Laserköpfe 5 sind so ausgebildet, daß jeder von ihnen die beiden Blechbänder 1, 2 gegenseitig verschweißen und in Bandlängsrichtung auseinanderschneiden kann. Die aufeinandergelegten und aufeinandergedrückten Blechbänder 1, 2 werden mit einer Geschwindigkeit von etwa 20 - 100 m/min unter den Laserköpfen 5 vorbeigeführt. Jeder Laserkopf 5 sendet, wie es in Figur 2 dargestellt ist, einen Laserstrahl 9 aus, mit einem inneren Strahlengang 9a mit hoher Energiedichte und einem äußeren Strahlengang 9b geringerer Energiedichte. Die Energiedichte des inneren Strahlenganges 9a ist so eingestellt, daß die beiden Blechbänder 1, 2 auf jeweils ihrer vollen Blechdickte s der Länge nach durchtrennt werden. Die Energiedichte des äußeren Strahlenganges 9b wird so gewählt, daß die aufeinanderliegenden Blechbänder 1, 2 beidseitig des durch den inneren Strahlengang 9a erzeugten Schnittes S der Länge nach durch Verbindungsschweißnähte 6a, 6b miteinander verschweißt werden.

Das Laserschweißen findet vom Bandanfang bis zum Bandende kontinuierlich statt. Der durch den Abstand A der Laserschweißköpfe 5 bestimmte Abstand B der Verbindungsschweißnähte 6a, 6b entspricht im wesentlichen dem halben Umfang des herzustellenden Dosenrumpfes nach der Formel B = 0,5 x D x π. Die äußeren Verbindungsschweißnähte haben von den Bandkanten einen Abstand von mindestens 2 mm, damit eine Kantenbesäumung möglich wird.

Durch das Laserschweißen und -schneiden entstehen mehrere voneinander getrennte Flachrohre 12, an deren Längsränder das obere Blechteil 1 mit dem unteren Blechbandteil 2 über die Schweißnähte 6a, 6b miteinander verbunden sind. Die Flachrohre 12, deren Länge der Bandlänge entspricht, die zwischen 1000 und 10000 m betragen kann, werden auf Haspeln 12' aufgewickelt. Die Haspeln 12' können dann zwischengelagert und zu einem Abfüller oder auch einem Dosenmacher geliefert werden. Durch einfaches Verschieben der Laserköpfe 5 in Bandrichtung läßt sich die Breite B der entstehenden Flachrohre 12 entsprechend dem gewünschten Dosendurchmesser einstellen. Die Breite B entspricht dabei 0,5 x D x π + 2 xs. Das Verbinden der beiden Blechbänder 1, 2 durch Laserschweißen läßt dabei auch das Vorhandensein von organischen Beschichtungen in der Schweißfuge zu, so daß die organische Beschichtung auf den Blechbändern 1, 2 durchgehend sein kann.

## Patentansprüche

1. Verfahren zur Herstellung von Dosenrümpfen aus Blech für die Fertigung von Dosen durch
Zusammenführen und Aufeinanderlegen von zwei auf Enddicke gewalzten Blechbändern (1,2), deren Breite ein Mehrfaches des halben Umfanges eines Dosenrumpfes beträgt,
Verbinden der aufeinanderliegenden Blechbänder (1,2) durch mehrere kontinuierlich in Bandlängsrichtung verlaufende Verbindungsschweißnähte (6a,6b), deren gegenseitiger Abstand in Bandquerrichtung dem halben Dosenumfang entspricht, durch kontinuierliches Vorbeibewegen der aufeinanderliegenden Blechbänder (1,2) an einer Laser-Schweißeinrichtung (4) mit mehreren, in entsprechenden gegenseitigen Abständen angeordneten Laserköpfen (5),
Längsschneiden der miteinander verschweißten Blechbänder (1,2) durch Laserschneiden längs jeder Verbindungsschweißnaht (6a,6b) zur Erzeugung mehrerer nebeneinanderliegender Flachrohre (12),
gegebenenfalls Aufrollen der Flachrohre (12) zur Zwischenlagerung und/oder Transport,
Entrollen der gegebenenfalls aufgerollten Flachrohre (12),
Querschneiden der Flachrohre (12) in Flachrohrabschnitte, deren Länge etwa der Dosenhöhe entspricht, und
Aufspreizen der einzelnen Flachrohrabschnitte zu jeweils einem, insbesondere zylindrischen, Dosenrumpf,
**dadurch gekennzeichnet,** daß das Schweißen und das Längsschneiden gleichzeitig mit jeweils ein und demselben Laserkopf (5) erfolgt, dessen Laserstrahl (9) zum Längsschneiden einen inneren Strahlengang (9a) mit hoher Energiedichte und zum Verschweißen der beidseitig des Schnittes (5) liegenden Bereiche der aufeinanderliegenden Blechbänder (1,2) einen Strahlengang (9b) niedrigerer Energiedichte aufweist.

2. Verfahren zur Herstellung von Flachrohren (12) aus Blech für die Fertigung von Dosenrümpfen durch
Zusammenführen und Aufeinanderlegen von zwei auf Enddicke gewalzten Blechbändern (1,2), deren Breite ein Mehrfaches des halben Umfanges eines Dosenrumpfes beträgt,
Verbinden der aufeinanderliegenden Blechbänder (1,2) durch mehrere kontinuierlich in Bandlängsrichtung verlaufende Verbindungsschweißnähte (6a,6b), deren gegenseitiger Abstand in Bandquerrichtung dem halben Dosenumfang entspricht, durch kontinuierliches Vorbeibewegen der aufeinanderliegenden Blechbänder (1,2) an einer Laser-Schweißeinrichtung (4) mit mehreren, in entsprechenden gegenseitigen Abständen angeordneten Laserköpfen (5),
Längsschneiden der miteinander verschweißten Blechbänder (1,2) durch Laserschneiden längs jeder Verbindungsschweißnaht (6a,6b) zur Erzeugung mehrerer nebeneinanderliegender Flachrohre (12),
Aufrollen der Flachrohre (12) zur Zwischenlagerung und/oder Transport,
**dadurch gekennzeichnet,** daß das Schweißen und das Längsschneiden gleichzeitig mit jeweils ein und demselben Laserkopf (5) erfolgt, dessen Laserstrahl (9) zum Längsschneiden einen inneren Strahlengang (9a) mit hoher Energiedichte und zum Verschweißen der beidseitig des Schnittes (5) liegenden Bereiche der aufeinanderliegenden Blechbänder (1,2) einen Strahlengang (9b) niedrigerer Energiedichte aufweist.

3. Verfahren nach Anspruch 2 **gekennzeichnet durch**
Entrollen der gegebenenfalls aufgerollten Flachrohre (12),
Querschneiden der Flachrohre (12) in Flachrohrabschnitte, deren Länge etwa der Dosenhöhe entspricht, und
Aufspreizen der einzelnen Flachrohrabschnitte zu jeweils einem, insbesondere zylindrischen, Dosenrumpf.

## Claims

1. Method for manufacturing can bodies from sheet metal for producing cans by
bringing together and superposing two sheet metal strips (1, 2) rolled to final thickness, the breadth of which is a multiple of half the circumference of a can body,
joining the superposed sheet metal strips (1, 2) by a plurality of joining weld seams (6a, 6b) which run continuously in the longitudinal direction of the strip and the mutual spacing of which in the transverse direction of the strip corresponds to half the can circumference, by continuously moving the superposed sheet metal strips (1, 2) past a laser welding device (4) with a plurality of laser heads (5) arranged with corresponding mutual spacing,
cutting the welded sheet metal strips (1, 2) longitudinally by laser cutting along each joining weld seam (6a, 6b) to produce a plurality of flat tubes (12) lying next to one another,
if necessary rolling up the flat tubes (12) for temporary storage and/or transport,
unrolling the possibly rolled flat tubes (12),
cutting the flat tubes (12) transversely into flat tube portions the length of which roughly corresponds to the height of the can, and
spreading the individual flat tube portions to form in each case an in particular cylindrical can body,
**characterised in that** the welding and the longitudinal cutting are carried out at the same time with in each case one and the same laser head (5) the laser beam (9) of which exhibits an inner beam path (9a) with a high energy density for the longitudinal cutting and a beam path (9b) with a lower energy density for the welding of the areas of the superposed sheet metal strips (1, 2) lying on either side of the cut (S).

2. Method for manufacturing flat tubes (12) from sheet metal for producing can bodies by
bringing together and superposing two sheet metal strips (1, 2) rolled to final thickness, the breadth of which is a multiple of half the circumference of a can body,
joining the superposed sheet metal strips (1, 2) by a plurality of joining weld seams (6a, 6b) which run continuously in the longitudinal direction of the strip and the mutual spacing of which in the transverse direction of the strip corresponds to half the can circumference, by continuously moving the superposed sheet metal strips (1, 2) past a laser welding device (4) with a plurality of laser heads (5) arranged with corresponding mutual spacing,
cutting the welded sheet metal strips (1, 2) longitudinally by laser cutting along each joining weld seam (6a, 6b) to produce a plurality of flat tubes (12) lying next to one another,
rolling up the flat tubes (12) for temporary storage and/or transport,
**characterised in that** the welding and the longitudinal cutting are carried out at the same time with in each case one and the same laser head (5) the laser beam (9) of which exhibits an inner beam path (9a) with a high energy density for the longitudinal cutting and a beam path (9b) with a lower energy density for the welding of the areas of the superposed sheet metal strips (1, 2) lying on either side of the cut (S).

3. Method according to claim 2, characterised by unrolling the possibly rolled up flat tubes (12),
cutting the flat tubes (12) transversely into flat tube portions the length of which roughly corresponds to the can height, and
spreading the individual flat tube portions to form in each case an in particular cylindrical can body.

## Revendications

1. Procédé de fabrication de corps de boîte de conserves en tôle, destinés à la fabrication de boîtes de conserves, au moyen d'opérations consistant
à réunir et superposer deux bandes de tôle (1, 2), laminées à l'épaisseur définitive, dont la largeur vaut un multiple de la demi-circonférence d'un corps de boîte de conserves,
à rendre solidaires l'une de l'autre les bandes de tôle (1, 2) superposées, au moyen de plusieurs cordons de soudure de solidarisation (6a, 6b) qui s'étendent d'une manière continue suivant la direction longitudinale des bandes et dont l'espacement mutuel suivant la direction transversale des bandes correspond à la demi-circonférence de boîte de conserves, en faisant passer d'une manière continue les bandes de tôle (1, 2) superposées devant un dispositif de soudage laser (4) comportant plusieurs têtes laser (5) disposées avec des espacements mutuels correspondants,
à découper longitudinalement les bandes de tôle (1, 2) soudées l'une à l'autre, par découpage laser le long de chaque cordon de soudure de solidarisation (6a, 6b) de façon à produire plusieurs tubes à plat (12) juxtaposés,
éventuellement à enrouler les tubes à plat (12) en vue d'un stockage intermédiaire et/ou d'un transport,
à dérouler les tubes à plat (12) éventuellement enroulés,
à découper transversalement les tubes à plat (12) en tronçons de tube à plat dont la longueur correspond approximativement à la hauteur de boîte de conserves, et
à déployer à l'état ouvert les différents tronçons de tube à plat pour former, pour chacun, un corps de boîte de conserves, notamment cylindrique, respectif,
**caractérisé en ce que** le soudage et le découpage longitudinal ont lieu en même temps, au moyen pour l'un et l'autre d'une seule et même tête laser (5) dont le faisceau laser (9) comporte, pour le découpage longitudinal, une partie intérieure de faisceau (9a) à densité d'énergie plus élevée et, pour le soudage des zones des bandes en tôle (1, 2) superposées situées des deux côtés de la coupe (5), une partie de faisceau (9b) à densité d'énergie plus faible.

2. Procédé de fabrication de tubes à plat (12) en tôle, destinés à la fabrication de corps de boîte de conserves, au moyen d'opérations consistant
à réunir et superposer deux bandes de tôle (1, 2), laminées à l'épaisseur définitive, dont la largeur vaut un multiple de la demi-circonférence d'un corps de boîte de conserves,
à rendre solidaires l'une de l'autre les bandes de tôle (1, 2) superposées, au moyen de plusieurs cordons de soudure de solidarisation (6a, 6b) qui s'étendent d'une manière continue suivant la direction longitudinale des bandes et dont l'espacement mutuel suivant la direction transversale des bandes correspond à la demi-circonférence de boîte de conserves, en faisant passer d'une manière continue les bandes de tôle (1, 2) superposées devant un dispositif de soudage laser (4) comportant plusieurs têtes laser (5) disposées avec des espacements mutuels correspondants,
à découper longitudinalement les bandes de tôle (1, 2) soudées l'une à l'autre, par découpage laser le long de chaque cordon de soudure de solidarisation (6a, 6b) de façon à produire plusieurs tubes à plat (12) juxtaposés,
à enrouler les tubes à plat (12) en vue d'un stockage intermédiaire et/ou d'un transport,
**caractérisé en ce que** le soudage et le découpage longitudinal ont lieu en même temps, au moyen pour l'un et l'autre d'une seule et même tête laser (5) dont le faisceau laser (9) comporte, pour le découpage longitudinal, une partie intérieure de faisceau (9a) à densité d'énergie plus élevée et, pour le soudage des zones des bandes en tôle (1, 2) superposées situées des deux côtés de la coupe (5), une partie de faisceau (9b) à densité d'énergie plus faible.

3. Procédé suivant la revendication 2, caractérisé par les opérations consistant
à dérouler les tubes à plat (12) éventuellement enroulés,
à découper transversalement les tubes à plat (12) en tronçons de tube à plat dont la longueur correspond approximativement à la hauteur de boîte de conserves, et
à déployer à l'état ouvert les différents tronçons de tube à plat pour former, pour chacun, un corps de boîte de conserves, notamment cylindrique, respectif.
